## Europäisches Patentamt

## European Patent Office

## Office européen des brevets

(19)

(11) Veröffentlichungsnummer: **0 248 239 B1**

(12) **EUROPÄISCHE PATENTSCHRIFT**

(45) Veröffentlichungstag der Patentschrift:
**18.07.90**

(51) Int. Cl.⁵: **B29B 17/00**

(21) Anmeldenummer: **87106910.0**

(22) Anmeldetag: **13.05.87**

(54) Verfahren und Vorrichtung zum Herstellen von Formteilen aus thermoplastichem Kunststoff, insbesondere ungereinigten und unsortierten Kunststoffabfällen.

(30) Priorität: **06.06.86 DE 3619144**

(43) Veröffentlichungstag der Anmeldung:
**09.12.87 Patentblatt 87/50**

(45) Bekanntmachung des Hinweises auf die Patenterteilung:
**18.07.90 Patentblatt 90/29**

(84) Benannte Vertragsstaaten:
**AT BE CH ES FR GB IT LI NL SE**

(56) Entgegenhaltungen:
**DE-A- 3 401 817**
**DE-A- 3 416 553**
**US-A- 4 189 291**

(73) Patentinhaber: **Heuschkel, Uwe, Klosterstrasse 22, D-6520 Worms(DE)**

(72) Erfinder: **Heuschkel, Uwe, Klosterstrasse 22, D-6520 Worms(DE)**

## Beschreibung

Die Erfindung betrifft ein Verfahren zum Herstellen von Formteilen aus thermoplastischem Kunststoff, insbesondere ungereinigten und unsortierten Kunststoffabfällen, bei dem der Kunststoff in einem Walzenextruder plastifiziert und anschließend zu Preß- und Formteilen weiterverarbeitet wird.

Die Erfindung betrifft ferner eine Vorrichtung zum Herstellen von Formteilen aus thermoplastischen Kunststoffen, insbesondere ungereinigten und unsortierten Kunststoffabfällen, bei der ein Walzenextruder zum Plastifizieren des Kunststoffes vorgesehen ist und bei der der plastifizierte, aus einer Extruderdüse austretende Kunststoff in Formen einfüllbar ist, insbesondere zur Ausübung des erfindungsgemäßen Verfahrens.

Ein solches Verfahren und eine solche Vorrichtung sind aus der DE-C 2 700 846 bekannt.

Verfahren und Vorrichtungen zum Wiederverwenden von Kunststoffabfällen bzw. Kunststoffmüll wurden bisher nicht in befriedigender Weise gelöst.

Es ist bekannt, Kunststoffabfälle zu reinigen, zu sortieren und zu sog. Re-Granulat zu verarbeiten, das zusammen mit neuem Kunststoff zu Kunststoffartikeln verarbeitet wird. Da das Säubern und Sortieren Handarbeit ist und Kunststoffabfall bzw. -müll ein müllähnliches, unhygienisches Substrat ist, gibt es in der Wirtschaft kaum Arbeitskräfte, die bereit sind, diese Handarbeit auszuführen; und wenn solche Kräfte gefunden werden, so muß diese Arbeit mit hohen Löhnen vergütet werden. Der nötige Anteil an Neukunststoff hilft nicht darüber hinweg, daß Produkte aus solchen Re-Granulaten von der Qualität her bestenfalls als zweite Wahl zu gelten haben, also nicht ohne weiteres vermarktet werden können. Dabei kommt besonders erschwerend hinzu, daß das Re-Granulat und infolgedessen die daraus hergestellten Produkte wegen der hohen Lohnkosten auch noch relativ teuer sind.

Zur derartigen Wiederverwendung von thermoplastischen Kunststoffabfällen unterschiedlichen Formats offenbart die US-A 4 189 291 eine Vorrichtung, bei der die Kunststoffabfälle von oben in einen großen Behälter eingefüllt werden. Unten mündet der Behälter in ein zylindrisches, beheiztes Gehäuse mit einer exzentrisch gelagerten, beheizbaren und drehend angetriebenen Walze. Die Kunststoffabfälle werden in einen ständig schmaler werdenden Spalt zwischen Walze und Gehäuse eingezogen, geschmolzen und durch mehrere Öffnungen am Spaltende ausgestoßen. Zerkleinerung der abgekühlten Stränge ergibt einen Rohstoff, der in sich weitgehend homogen ist und mit Hilfe von Schneckenextrudern zu Formlingen verarbeitet werden kann. Alternativ können die Stränge auch unabgekühlt von Schneckenextrudern weiterverformt werden. Kunststoffmüll mit Fremdanteilen, wie Holz, Textilien, Glas, Steinen, Metall, kann diese Vorrichtung nicht verarbeiten.

Ähnlich verhält es sich mit der Quetschwalzenpresse gemäß DE-A 3 401 817. Auch diese Vorrichtung ist zur Verarbeitung ungereinigten Kunststoffmülls ungeeignet. Da bereits Verklumpungen des eingespeisten Kunststoffes Betriebsstörungen verursachen können, sind solche Blockaden erst recht bei Fremdkörpern aus Holz, Metall oder dergl. zu erwarten. Auch diese Quetschwalzenpresse liefert nur ein Vor- oder Zwischenprodukt, bei dem heterogene Kunststoffe in gewissem Umfange homogenisiert sind. Zum Herstellen von Formlingen bedarf es geeigneter, separater Formpressen oder zusätzlicher Extruder.

Re-Granulate wurden in der Regel zur Verarbeitung in Schneckenextrudern plastifiziert.

Ein Ausweg aus dem Dilemma ständig steigender Berge von thermoplasthaltigen Industrie- und Haushaltsabfällen bzw. Kunststoffmüll schien die Erfindung des sog. Walzenextruders (DE-C 2 700 846) zu sein. Der Walzenextruder ist derart robust aufgebaut, daß er nicht nur ungereinigten thermoplastischen Kunststoffmüll bzw. -abfall zu verarbeiten vermag, sondern auch im Kunststoffmüll enthaltene Steine oder Metallteile toleriert bzw. derart verarbeitet, daß der in ihm plastifizierte thermoplastische Kunststoffmüll homogenisiert bleibt und keine Qualitätseinbußen erleidet. Bisher wurde der aus der Extruderdüse solcher Walzanextruder ausgestoßene plastifizierte Kunststoff von Hand in Stücke geeigneter Größe kalibriert bzw. dosiert, d.h. abgeschnitten, in entsprechende Formen eingebracht und in den Formen mittels geeigneter Einrichtungen gepreßt. So wurden Gegenstände aus Kunststoff hergestellt, die Gewichte in der Größenordnung einiger weniger Kilo hatten.

Die DE-A 3 416 553 offenbart eine Quetschwalzenpresse mit nachgeschalteter Dosier- und Beschickungsvorrichtung für Formpressen, bei der die vorgenannten Handarbeiten eingespart und stattdessen mechanisiert oder automatisch ausgeführt werden können. Das Einsparen von Handarbeit, d.h. deren Automatisierung, erfordert entsprechende, teuere Anlagen und Einrichtungen. Deren Amortisation wirkt kostensteigernd auf die Produkte, bzw. Formlinge, so daß deren Preis einer erfolgreichen Vermarktung entgegensteht. Dabei muß nämlich berücksichtigt werden, daß solche Formlinge, die aus Kunststoff mit Fremdanteilen — wenn auch homogeniert — bestehen, infolgedessen nicht einmal die Qualität von Formlingen aus den vorstehend erwähnten Regranulaten haben.

Trotz Homogenisierung und hoher Preßdrücke zum Erzielen einheitlich dichter und formtreuer Kunststoff-Gegenstände können jedoch nur Artikel dritter Wahl hergestellt werden, für die kein Markt besteht. Dabei spielt auch eine Rolle, daß das bisherige Vorgehen sehr aufwendige Anlagen erfordert; Kunststoff-Gegenstände dieser Herstellungsweise müssen daher verhältnismäßig teuer sein, wenn auch nur die Chance einer Amortisation der Anlagekosten bestehen soll, dürfen aber wiederum nicht teuer sein, wenn auf dem Markt Abnehmer gefunden werden sollen.

Im Walzenextruder plastifizierter thermoplastischer Kunststoffabfall kann einen Werkstoff ergeben, der säurebeständig, witterungsbeständig sowie beständig gegenüber Insekten und anderen tierischen oder pflanzlichen Schädlingen ist und der eine angemessene Festigkeit aufweist.

Um die ständig steigenden Kunststoffmüll-Berge, deren Beseitigung durch Verbrennung o. dgl. teuer und problematisch ist, sinnvoll wieder in den Wirtschaftskreislauf als wertvolles Rohprodukt einzuführen, geht die Erfindung von der Überlegung aus, daß zunächst geeignete Produkte gefunden werden müssen, die Abnehmer finden. Es wurde gefunden, daß eine derartige Produktpalette zweckmäßigerweise aus Gegenständen bestehen sollte, die großformatig und schwergewichtig sind, nicht nur deswegen, weil dadurch viel Abfallkunststoff verbraucht wird, sondern auch deshalb, weil bei schweren, klobigen Gegenständen, z. B. mit einem Gewicht von 100 oder mehreren hundert Kilogramm, nicht mehr von dritter Wahl bezüglich der Qualität gesprochen wird, sondern Eigenschaften, die bei Kleinprodukten qualitätsmindernd wirken, optisch produktfördernd ausgenützt werden können.

Als bevorzugte Produktpalette sind daher drei Gruppen von Formteilen gewählt worden, und zwar eine Universalplatte, Vollprofile und Hohlkörper. Vollprofile können nach Art von Baumstämmen zum Herstellen von Palisaden benutzt werden, sie können bei nicht prismatischer Gestalt Tischplatten, Warnbakenständer u. dgl. bilden.

Würde die Herstellung dieser Produkte bzw. Formteile jedoch nach dem bereits geschilderten, bisherigen Vorgehen erfolgen, so würden die Produkte immer noch zu teuer auf den Markt kommen, also keine Abnehmer finden, weil die Amortisation der extrem hohen Anlagenkosten niedrige Preise verbietet.

Daher liegt der Erfindung im zweiten Schritt der Überlegung die Aufgabe zugrunde, ein Verfahren und eine Vorrichtung der eingangs genannten Art zu schaffen, mittels welcher die erfindungsgemäß vorgesehenen Formteile (Produkte) unter Vermeidung extremer Anlagen- und Herstellungskosten hergestellt werden können.

Zur Lösung dieser Aufgabe kennzeichnet sich das einleitend genannte Verfahren erfindungsgemäß dadurch, daß die Kunststoffabfälle im Walzenextruder auf einen Druck von bis zu ca. 140 bar gebracht werden. Vor der Extruderdüse, taktweise gesteuert, liegend angeordnete Formen, die wenigstens an ihren extruderseitigen Enden mit Grundplatten versehen sind, werden mit den Grundplatten in quer zur Extruderdüse verlaufenden Führungen aus einer Speicherzone mit einem zentralen Fülloch in der extruderseitigen Grundplatte vor die Extruderdüse geschoben. Die vor der Extruderdüse liegende Form wird mit den plastifizierten Kunststoffabfällen unter dem Druck des Extruders gefüllt. Der Füllzustand der Form wird überwacht. Bei Erreichen der Sollfüllung wird ein erneuter Vorschub auf die Formen in der Speicherzone ausgeübt, welcher die gefüllte Form seitlich von der Extruderdüse weg mit der Grundplatte über eine Wartezone hinweg auf eine in einer Aushebestation der Führungen eingelegte Ausheberplatte geschoben und dabei die Füllöffnung in der Grundplatte verschlossen, wobei gleichzeitig eine neue Form aus der Speicherzone vor die Extruderdüse geschoben wird und die extruderseitigen Oberflächen der Grundplatten während des Formenwechsels an den Rändern der Extruderdüse dichtend gleiten und die Extruderdüse vorübergehend gegen den Austritt von Kunststoff verschließen. Die Formen werden aus der Aushebestation entnommen und gekühlt, wonach die Formteile entnommen und die Formen in eine Eingabestation der Führungen eingebracht werden.

Die eingangs genannte Vorrichtung kennzeichnet sich zur Lösung der vorgenannten Aufgabe erfindungsgemäß dadurch, daß der Walzenextruder Druck in Größenordnungen von bis zu 140 bar aufbauend und gegenüber diesem Druck dicht ausgebildet ist. Die Formen weisen wenigstens an einem Ende, Formen mit über ihrer Länge veränderlichem Querschnitt wenigstens am Ende mit dem größten Querschnitt, eine über die äußeren Formumrisse hinausragende Grundplatte auf. Die Grundplatte weist eine zum Formquerschnitt zentrierte, der Form der Extruderdüse angepaßte Füllöffnung auf. Wenigstens parallel zur Lotebene der Öffnung der Extruderdüse sind Führungen angeordnet, welche zugleich rechtwinklig zur Ausstoßrichtung der Extruderdüse verlaufen. Die Grundplatten sind mit dem oberen und unteren Rand bei liegenden, mit ihren Längsachsen parallel zur Ausstoßrichtung orientierten Formen in den Führungen gehalten. Die extruderseitige Grundplatte ist dichtend gleitend an der die Extruderdüse umgebenden Oberfläche geführt. Die Führungen sind an einem Ende in einer Einspeisestation offen. Die Formen sind mit den Füllöffnungen voran in die Führungen einschiebbar. An der Einspeisestation ist ein in Längsmittelrichtung der Führungen orientierter Druckzylinder mit einer Grundplattenbreite entsprechenden Arbeitshublänge vorgesehen. Neben der Einspeisestation der Führungen in Richtung Extruderdüse ist eine Speicherstation vorgesehen, deren Länge wenigstens der Breite der Grundplatte einer Form entspricht. Neben der Speicherstation liegt die Füllstation mit der Extruderdüse. In Vorschubrichtung der Formen ist an die Füllstation anschließend vorzugsweise eine Wartezone vorgesehen, deren Länge der Breite mehrerer Grundplatten entspricht, wobei wenigstens eine Form mit ihrer Grundplatte dichtend gleitend hinter der Extruderdüse an der Oberfläche, die die Extruderdüse umgibt, oder an einer anderen Fläche, anliegend geführt ist. Am Ende der Führungen ist eine Aushebestation vorgesehen, in welcher die Formen mittels einer in die Führungen einlegbaren Ausheberplatte, die an der Grundplatte dichtend gehalten ist, verschlossene Füllöffnungen aufweisen und aus den Führungen entnehmbar sind.

Bei dem neuen Verfahren und der neuen Vorrichtung wurde der an sich bekannte Walzenextruder derart abgedichtet und umgestaltet, daß in dem plastifizierten Kunststoff ein Druck in Größenordnungen von bis zu 140 bar aufgebaut werden kann und daß das Lager diesen Druck auch aushalten und zuverlässig abdichten. Ausgehend von dieser Maßnahme ergibt sich die Möglichkeit, plastifizierten Kunststoff aus der Extruderdüse mit einem Druck auszustoßen, der nicht nur ausreicht, um Formen zu füllen, sondern auch das nachträgliche, bisher übliche Pressen des Kunststoffes in den Formen erspart. Es besteht somit also die Möglichkeit, Formen unmittelbar an die Extruderdüse anzuschließen und fertig zu füllen.

Dabei entsteht jedoch ein weiteres Problem; denn die Formen müssen einerseits gegen den Schub oder Druck des aus der Extruderdüse austretenden plastifizierten Kunststoffes verankert bzw. festgehalten werden und sie müssen taktweise schnell ausgetauscht werden können, ohne den Extruder anzuhalten; denn Extruder derartiger Bauarten, wie sie zur Plastifizierung von Kunststoffabfällen verwendbar sind, können nicht taktweise ein- und ausgeschaltet werden. Deshalb ist erfindungsgemäß einerseits eine mit der Ebene der Extruderdüse fluchtende Führung und eine Form mit wenigstens einer Grundplatte entwickelt worden, die in diesen Führungen gleitend gehalten ist. Die Grundplatte, welche die Form frontseitig bedeckt, hat im Zentrum eine in Form und Größe an die Extruderdüse angepaßte Füllöffnung und wird taktweise gesteuert von einem Druckzylinder vor die Extruderdüse geschoben. Auf der Rückseite der Form angebrachte Kontrollöffnungen, die mittels optischer Sensoren überwacht werden, stellen fest, wann die Form gefüllt ist und geben dem Druckzylinder das Arbeitssignal zum Austausch der Form. Dieser Vorgang geschieht, indem in der bzw. den Führungen in einer Speicherzone eine leere Form bereitgehalten wird, die beim erforderlichen Austausch vor die Extruderdüse geschoben wird und zugleich die gefüllte Form vor sich her schiebt. Während dieses Austauschvorganges gleiten die front- bzw. extruderseitigen Oberflächen der Grundplatten der Formen auf die die Extruderdüse umgebenden Oberflächen (ggfs. Oberflächen von Platten der Führungen), dichten insbesondere aber während des Wechsels die Extruderdüse ab. Dieses kurzfristige Verschließen der Extruderdüse ist ohne Einfluß auf den Arbeitsablauf und das Ergebnis und beeinträchtigt auch die Arbeitsweise des Extruders nicht. Die frisch gefüllte Form muß an der Füllöffnung noch verschlossen gehalten werden, damit der eingepreßte Kunststoff nicht herausfließt. Je nach Ausgestaltung von Verfahren und Vorrichtung kann dieses Verschließen zunächst durch Anliegen der Grundplatte an der die Extruderdüse umgebenden Oberfläche geschehen oder unmittelbar durch eine Aushebeplatte erfolgen, die in die Führungen eingelegt wird und auf die die Form mit der Grundplatte aufgeschoben wird. Die Form kann nun in gefülltem Zustand weitertransportiert werden und so lange aufbewahrt oder auch gefördert werden, bis der Kunststoff im Inneren erstarrt. Bei jedem Arbeitstakt des Druckzylinders der Führungen wird eine neue Form in eine Einspeisestation der Führungen eingeschoben. Je nach Ausgestaltung von Verfahren und Vorrichtung kann an die Einspeisestation eine Speicherstation folgen, bei welcher in den Führungen eine oder mehrere leere Formen darauf warten, in die Füllstation, d. h. vor die Extruderdüse, geschoben zu werden.

Um bei diesem Vorgehen eine leichte Handhabung der Formen, insbesondere der gefüllten Formen zu gewährleisten, ist bei einer Weiterbildung der Vorrichtung gemäß Anspruch 11 vorgesehen, daß die Formen an beiden Enden mit Grundplatten versehen sind, und Anspruch 12 sieht vor, daß beide Grundplatten gleiche Form und Größe haben.

Dabei kann es je nach Formteil möglich oder erforderlich sein, Grundplatten der verschiedensten Form, quadratisch, rechteckig, rund o. dgl. zu verwenden.

Es versteht sich von selbst, daß die Führungen bei Formen mit zwei Grundplatten beide Grundplatten aufnehmen müssen. Dies hat den wesentlichen Vorteil, daß die Aufnahme der Druckreaktionen beim Füllen der Form vor der Extruderdüse erleichtert wird.

Gemäß Anspruch 2 und Anspruch 13 ist es erfindungsgemäß, eingedenk des einleitend genannten ersten produktgebundenen Erfindungsschrittes, vorteilhaft, wenn die Formen ein großes Fassungsvermögen haben und mindestens bis zu 100 kg oder auch mehr plastifizierten Kunststoffes aufnehmen können. Auf diese Weise können die gewünschten großformatigen, schwergewichtigen Formteile hergestellt werden.

Die Erfindung gestattet es auch (dank des hohen im Extruder aufgebauten Druckes), Formteile verhältnismäßig großer Länge herzustellen, falls nur ein gewisses Mindestverhältnis von Querschnitt und Länge gewahrt ist. Es wurde gefunden, daß zufriedenstellende Füllung von Formen und damit auch die zufriedenstellende Herstellung von Formteilen möglich ist, wenn die Länge einer Form nicht größer als das 15fache des Kreisdurchmessers des Querschnittes ist. Bei Formen anderer Querschnitte muß die Querschnittsfläche rechnerisch in eine Kreisfläche umgewandelt und so der Kreisdurchmesser ermittelt werden, der maßgebend für die größtmögliche Länge der Form ist. Aufgrund dieser Maßnahme können unerwartet lange Formteile produziert werden.

Das bisher beschriebene, erfindungsgemäß ausgebildete Verfahren sowie die erfindungsgemäß ausgebildete Vorrichtung arbeiten lediglich halbautomatisch. Die leeren Formen müssen von Hand in die Einspeisestation der Führungen eingebracht werden, die Aushebeplatten müssen auf gleiche Weise in die Führungen eingelegt werden, die Kühlung, das Entformen und Rückführen der leeren Formen zur Einspeisestation sind Handarbeit. Auch wenn diese Arbeiten mittels geeigneter Hilfseinrichtungen, Hebezeuge, Transporteinrichtungen u. dgl. in weitgehendster Weise rationalisiert werden können, bleiben sie auch wirtschaftlichen Erwägungen der Sonderfertigung kleiner Stückzahlen besonderer Formteile vorbehalten.

Nach einem weiteren Merkmal der Erfindung ist auch eine vollautomatisierte Herstellung und Vorrichtung zur Lösung der vorgenannten Aufgabe vorgesehen, wobei sich das Verfahren unter Benutzung der bereits erwähnten Lösungsmerkmale dadurch kennzeichnet, daß das Füllen der Formen, das Kühlen, das Zuführen der leeren Formen zur Eingabestation der Führungen sowie das taktweise Auswechseln der gefüllten Formen vor der Extruderdüse automatisch durchgeführt werden.

Die schon genannte Vorrichtung kennzeichnet sich nach einem weiteren Merkmal der Erfindung unter Benutzung der schon genannten Vorrichtungsmerkmale zur Lösung der vorgenannten Aufgabe dadurch, daß die Aushebestation der Führungen an einen rechtwinklig zu den Führungen verlaufenden Förderer angeschlossen ist. Dieser Förderer ist in eine Kühleinrichtung mit Wasserbad und pneumatischem Rost eingegliedert und an seinem Ende mit einer Formen-Entnahmestation versehen, welche neben einer Entformstation liegt. Rechtwinklig zu diesem Förderer verlaufend ist ein Weiterförderer vorgesehen, welcher seitliche Führungswände zum Längsorientieren der leeren Formen aufweist und ein Abgabeende aufweist, welches an ein Karussel angrenzt, welches die Formen einheitlich mit den Füllöffnungen voran um 90 Grad dreht und mittels eines Druckzylinders auf einen Zwischenförderer, der rechtwinklig zum Weiterförderer in Richtung Einspeisestation verläuft und fördert, aufschiebt. Seitlich neben dem Ende des Zwischenförderers verläuft eine U-Schiene parallel und dieser gegenüber sind zwei Druckzylinder vorgesehen, welche die Formen quer zu sich selbst auf die U-Schiene schieben. Die U-Schiene mündet in die Einspeisestation der Führungen und weist am der Einspeisestation abgekehrten Ende einen Druckzylinder auf, welcher die Formen in die Einspeisestation schiebt. Alle Druckzylinder,der Förderer usw. sind berührungskontaktgesteuert. Der Druckzylinder der Führungen ist mittels optischer, den Kontrollöchern der Formen in der Füllstation zugeordneter Sensoren gesteuert.

Mit den vorgenannten Lösungen ist ein, mit Ausnahme des Entformens, vollautomatisches Vorgehen beim Herstellen von Formteilen von plastifizierten Kunststoffabfällen möglich, es können hohe Stückzahlen mit hoher Qualität preiswert gefertigt und auf den Markt gebracht werden.

Wesentlich bei diesem Vorgehen ist, daß die Füllöffnung der Grundplatten der Formen so lange verschlossen gehalten wird, bis durch Randzonen-Erstarrung bzw. -Erkaltung gewährleistet ist, daß der Kunststoff nicht mehr aus der Form herausfließt. Danach kann freizügiger gehandhabt werden und eine Schnellkühlung im Wasserbad und mit Hilfe eines pneumatischen Rostes erfolgen. Die Formen werden dann nach Verlassen der Kühlstation von Hand entnommen, entformt und von Hand auf den Weiterförderer abgegeben. Von dort erfolgt eine Ausrichtung, auf dem Karussel eine Wendung und einheitliche Orientierung in der Art, daß die Formen mit den Füllöffnungen voran liegen, und auf dem Zwischenförderer der Weitertransport in Richtung Einspeisestation der Führungen. Damit dieses Einspeisen fülltaktangepaßt vorgenommen werden kann, liegt am Ende des Zwischenförderers eine U-Schiene, die parallel zum Zwischenförderer verläuft und auf welche die ausgerichteten, einheitlich orientierten Formen quer zu sich selbst eingeschoben werden und anschließend taktweise in die Führungen der Einspeisestation eingeschoben werden. Zu letzterer Tätigkeit ist ebenfalls ein Druckzylinder vorgesehen.

Beim Entformen, taktweisen Fördern und Bewegen der Formen entsteht kein Zeitdruck. Um nämlich eine Form, die 100 kg plastifizierten Kunststoffes aufnimmt, füllen zu können, kann eine Zeit von mindestens fünf Minuten vergehen. Es sind aber auch erheblich größere Füllzeiten möglich, wenn Formkonturen und Formengrößen dies verursachen. Aufgrund dieser Tatsache kann das Entformen von Hand bei einem ausreichenden Formenvorrat ohne Hast durchgeführt werden, wobei es auch denkbar ist, Entformvorrichtungen zu entwickeln und einzusetzen.

Ein Extruder, insbesondere ein Walzenextruder, ist niemals in der Lage, die gleiche Menge plastifizierten Kunststoffabfalls sekundengenau oder gar bruchteilsekundengenau pro Zeiteinheit auszustoßen. Deshalb ist die Maßnahme der Erfindung, die Formen mit Kontrollöffnungen zu versehen, um den Füllungszustand der Formen mittels optischer Sensoren zu überwachen, von wesentlicher Bedeutung; denn mit einem fest vorgegebenen Zeittakt könnte das Verfahren und die Vorrichtung gemäß vorliegender Erfindung nicht arbeiten. Es muß der besonderen Arbeitsweise des Walzenextruders Rechnung getragen werden. Durch die Überwachung des Füllzustandes der Formen steuert sich der Arbeitstakt abhängig vom Ausstoß des Walzenextruders bzw. abhängig von der Füllung der Formen selbsttätig und es werden immer einwandfrei gefüllte Formen erzielt. Andererseits wird es auch verhindert, daß eine bereits gefüllte Form zu lange vor der Extruderdüse verbleibt und einen unerwünschten zusätzlichen Druckaufbau im Walzenextruder verursacht.

Weitere, bisher nicht genannte Weiterbildungen des erfindungsgemäß ausgebildeten Verfahrens und der erfindungsgemäß ausgebildeten Vorrichtung sind in den Ansprüchen offenbart.

Ausführungsbeispiele der erfindungsgemäß ausgebildeten Vorrichtungen zum Ausüben der erfindungsgemäß ausgebildeten Verfahren sind in den Zeichnungen dargestellt.

Es zeigt:

Fig. 1 - eine Längs-Schnittansicht einer Ausführungsform einer Form für einen zylindrischen Vollkörper,

Fig. 2 - die Frontansicht einer halbautomatisch arbeitenden Vorrichtung,

Fig. 3 - eine Schnittansicht bei längs der Linie III-III in Fig. 2 verlaufender Schnittebene,

Fig. 4 - eine Schnittansicht bei längs der Linie IV-IV in Fig. 2 verlaufender Schnittebene,

Fig. 5 - eine Schema-Frontansicht der Vorrichtung gemäß Fig. 2,

Fig. 6 - drei nebeneinanderliegende Schemaansichten gemäß Fig. 5, welche einen Arbeitstakt repräsentieren,

Fig. 7 - eine Schemadraufsicht auf eine vollautomatisch arbeitende Anlage.

In den Figuren ist nur jeweils anbruchartig schematisch ein Walzenextruder (1) dargestellt, welcher es ermöglicht, Kunststoffmüll thermoplastischer Art ungereinigt und unsortiert zu plastifizieren, homogenisieren und aus einer Extruderdüse (2) auszustoßen. Nicht im einzelnen dargestellt ist der Aufbau des Walzenextruders (1) und nicht dargestellt ist, daß der Kunststoffmüll zuvor auf eine Teilchengröße von ca. 6 mm zerkleinert und mittels einer Zellenradschleuse zeitlich dosiert in den Walzenextruder (1) eingegeben wird.

Nicht dargestellt ist außerdem, daß der herkömmliche Walzenextruder (1) in der Weise modifiziert wurde bzw. ist, daß er neben der Reibungs- oder Friktionsplastifizierung des Kunststoffmülles die Fähigkeit besitzt, diesen ungereinigt zu verarbeiten, einschließlich etwaigen Einschlusses von Steinen oder Metall, eine einwandfreie Homogenisierung zu erzielen und zugleich in der plastifizierten, homogenisierten Kunststoffmasse einen Druck in Größenordnungen von bis zu 140 bar zu erzeugen. Diese Modifikation setzt auch die in den Zeichnungen nicht wiedergegebene Verbesserung der Lager der Walze voraus; denn diese muß den hohen entwickelten Drücken standhalten.

Es ist von sehr wesentlicher Bedeutung, daß der plastifizierte homogene Kunststoff aus der Extruderdüse unter Druck ausgepreßt wird.

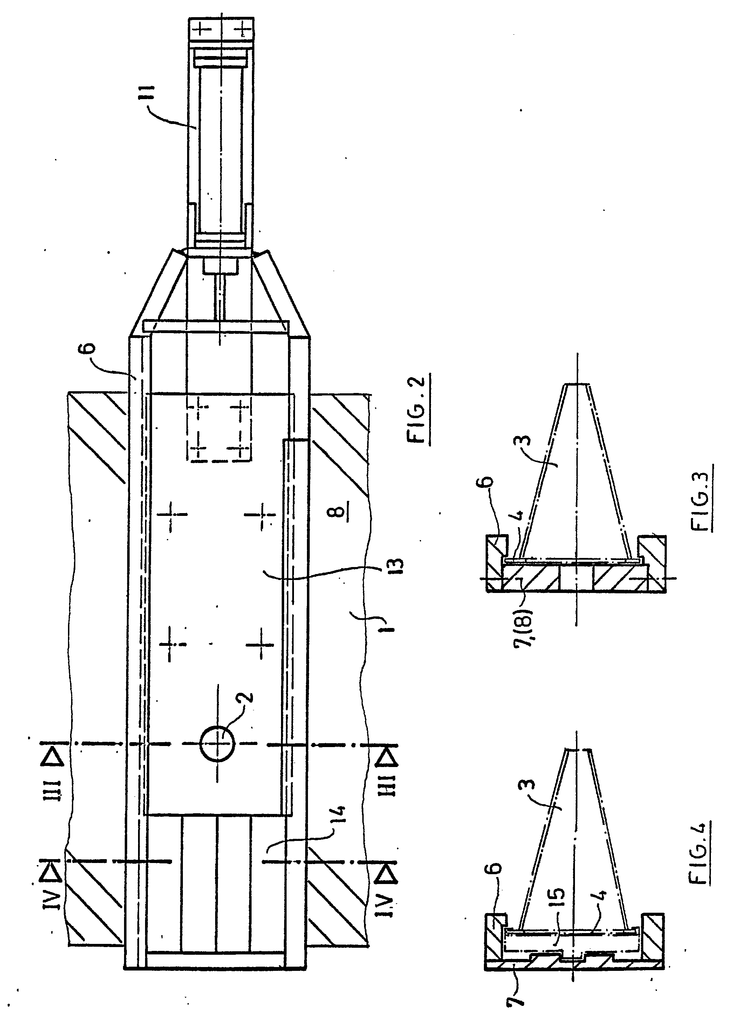

Durch diese Maßnahme ist es möglich, Formen (3) unter dem Druck des Walzenextruders (1) zu füllen. Dazu müssen die Formen (3) gegen den Druck des aus der Extruderdüse (2) austretenden plastifizierten Kunststoffes verankert werden, weil sie sonst von der Extruderdüse (2) bzw. dem austretenden Kunststoff weggeschoben würden. Zu diesem Zweck haben die Formen (3) wenigstens an der Füllseite eine Grundplatte (4), welche im Zentrum der Form (3) eine Füllöffnung (5) aufweist, die in Form und Größe der Form und Größe der Extruderdüse (2) angepaßt ist. Die Grundplatte (4) steht beim Füllen lotrecht, die Form verläuft mit ihrer Längsachse waagerecht. Zur Aufnahme der Fülldruckreaktionen sind Führungen (6) vorgesehen, welche gemäß Fig. 3 und 4 z. B. aus einem Gestell (7), welches in Lotrichtung parallel zu der die Extruderdüse (2) umgebenden Oberfläche (8) verläuft und an den Enden nach Art von C-förmigen Schienen bzw. C-Profilen gestaltet ist, derart, daß die Grundplatten (4) in diesen C-Profilen, die mit ihren Öffnungen einander zugekehrt sind, mit ihrer oberen und unteren Kante umschlossen und geführt sowie gegen Druck gehalten sind.

Die Formen (3) sind naturgemäß, je nach Art des herzustellenden Formteiles, gestaltet. Sie sind eingedenk der besonderen Produktpalette großformatig ausgebildet und nehmen bis zu 100 kg plastifizierten Kunststoffes oder mehr auf.

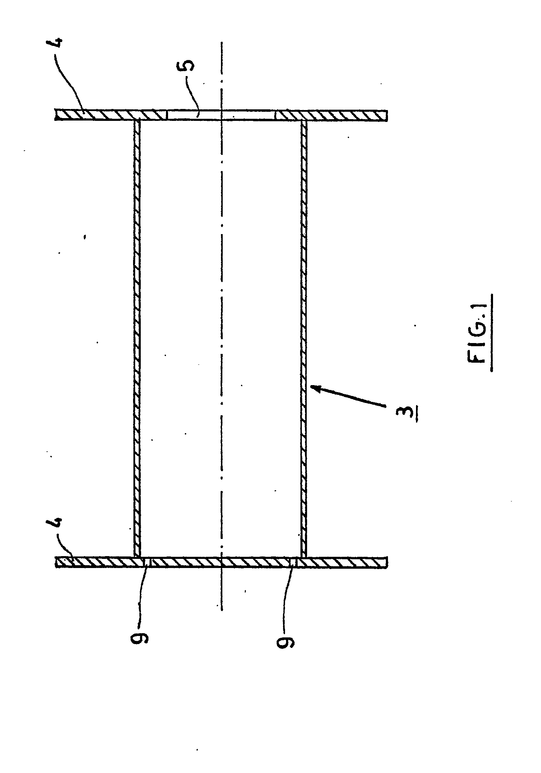

Die Fig. 1 zeigt den Längsschnitt einer Form (3), die an beiden Enden Grundplatten (4) aufweist, wobei die extruderseitige Grundplatte (4) die Füllöffnung (5) hat. Dargestellt ist eine Form für einen prismatischen Körper, bspw. mit Kreis-, Viereckoder anderem Querschnitt. Am hinteren, also extruderfernen, Ende ist die Form gem. Fig. 1 mittels der Grundplatte (4) verschlossen, hat jedoch am oberen und unteren Bereich Kontrollöffnungen (9). Wenn sich eine Form (3) vor der Extruderdüse (2) befindet, kontrollieren optische Sensoren (10) durch die Kontrollöffnungen (9) den Füllvorgang:

Die Figuren 3 und 4 zeigen Formen (3), die nur eine Grundplatte (4) aufweisen und die für nicht prismatische, bspw. konus- oder kegelförmige Formteile vorgesehen sind. Die Kontrollöffnungen (9) und optischen Sensoren (10) können bei diesen Formen (3) an erfahrungsgemäß geeigneten Stellen der Formen (3) vorgesehen werden.

Abweichend von den als Beispiel genannten Formen (3) können Formen für Universalplatten, für anders gestaltete Vollkörper oder auch für Hohlkörper verwendet werden. Bei schwergewichtigen Formteilen sollten die Formen (3) zwei Grundplatten (4) haben, um die Handhabung zu erleichtern. Die Formen können einen verhältnismäßig hohen Schlankheitsgrad haben, um z. B. Stangenmaterial zu produzieren, wenn lediglich das Verhältnis von Querschnitt zu Länge eingehalten wird, welches es dem im Walzenextruder (1) aufgebauten Druck erlaubt, die Form (3) einwandfrei zu füllen. Wenn eine Form mit Kreisquerschnitt einen Kreisdurchmesser von bspw. 20 cm hat, dann darf sie maximal 300 cm, also 15mal so lang wie der Kreisdurchmesser, ausgebildet sein. Bei anderen Querschnitten oder gar Hohlkörpern ist die Querschnittsfläche auf einen Kreis gleicher Flächengröße umzurechnen, um das Durchmesserverhältnis zur Länge zu errechnen. Bei Formen mit über deren Länge wechselnden Querschnittsgrößen sollte der größte Querschnitt an der Füllöffnung (5) liegen.

Ein Walzenextruder (1) ist nicht in der Lage, plastifizierten Kunststoff in genau dosierten gleichen Mengen sekunden- oder bruchteilsekundengenau aus seiner Extruderdüse (2) auszustoßen, sondern es gibt gewisse Schwankungen. Deshalb kann das Auswechseln der Formen (3) vor der Extruderdüse (2) nicht zeitgesteuert erfolgen, sondern muß mit Hilfe der Kontrollöffnungen (9) durch die optischen Sensoren (10) erfolgen. Die gefüllten Formen (3) dürfen aber auch nicht vor der Extruderdüse (2) verbleiben, wenn sie gefüllt sind, weil sich sonst im Walzenextruder (1) über den schon entwickelten hohen Druck zusätzlicher Rückdruck entwickeln würde. Andererseits kann ein Walzenextruder (1) zum Auswechseln der Formen nicht angehalten werden, sondern muß kontinuierlich weiterlaufen. Es kommt daher darauf an, einerseits die Grundplatte (4) mit der Füllöffnung (5) druckdicht gegen den Austritt von plastifiziertem Kunststoff an der die Extruderdüse (2) umgebenden Oberfläche (8) abzudichten bzw. gleitend zu führen und andererseits die Extruderdüse (2) beim Formwechsel gegen den Austritt von plastifiziertem Kunststoff ebenso dicht kurzfristig zu verschließen. Um dieses zu ermöglichen, betätigen die optischen Sensoren (10) bei Feststellung der Sollfüllung einer Form entsprechende Schaltmittel, um einen Druckzylinder (11), einen Pneumatikzylinder, zu betätigen. Dieser Pneumatikzylinder (11) ist vor einer Einspeisestation (12) der Führungen (6) angeordnet. In die Einspeisestation (12) ist mit der Füllöffnung (5) voran eine Form (3) eingeführt worden. In einer Speicherstation (13) befindet sich bereits eine zuvor eingespeiste Form (3) in Warteposition und die zu füllende Form (3) befindet sich vor der Extruderdüse (2). Durch Betätigen des Druckzylinders (11) wird auf die frisch eingespeiste Form (3) ein Schub in Längsrichtung der Führungen (6) ausgeübt. Dieser Vorschub vollzieht sich äußerst schnell. Dabei gleitet die Grundplatte (4) der bereits gefüllten Form (3) entweder auf der die Extruderdüse (2) umgebenden Oberfläche (8) oder auf dem entsprechend ausgebildeten Gestell (7) der Führungen derart, daß die Füllöffnung (5) verschlossen bleibt und gleichzeitig die Extruderdüse (2) dicht verschlossen wird, während die Gleitbewegung ausgeführt wird. Unter gleichen Bedingungen wird eine leere Form aus der Speicherstation (13) vor die Extruderdüse (2) geschoben und der Füllvorgang beginnt.

An die Füllstation bzw. Extruderdüse (2) schließt sich bei der Ausgestaltung der Vorrichtung gemäß Fig. 2, 3 und 4 unmittelbar eine Aushebestation (14) an. Vor jedem Arbeitstakt wird in die leere Aushebestation (14) eine Aushebeplatte (15) eingelegt, die die Grundplatte (4), welche die Füllöffnung (5) aufweist, nach Art der Führungen (6) umfaßt. Bei dem Arbeitstakt des Druckzylinders (11) wird die gefüllte Form mit der Füllöffnung (5) auf die Aushebeplatte (15) geschoben, die Füllöffnung (5) wird somit verschlossen. Bei der Vorrichtung gemäß Fig. 2 kann die gefüllte Form entnommen, abgekühlt und entformt werden. Nach dem Entformen kann die leere Form (3) wieder in der Einspeisestation (12) in die Führungen (6) eingespeist werden.

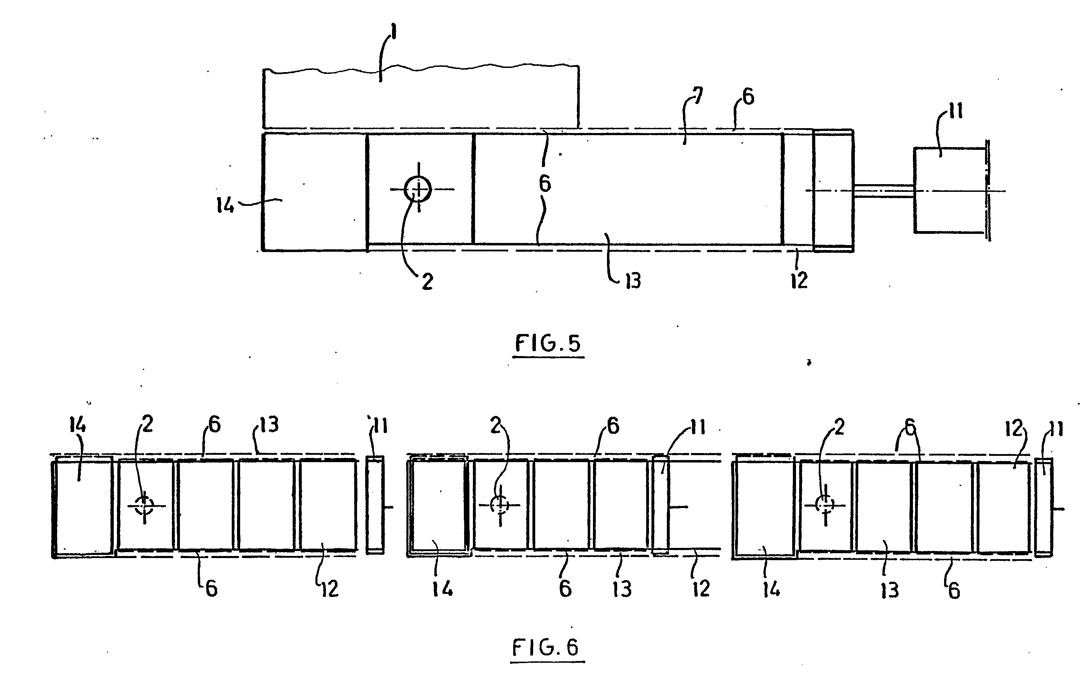

Bei der Schemadarstellung gem. Fig. 5 bzw. 6 ist die Führung (6) mit einer Speicherstation (13) ausgerüstet, welche zwei Formen (3) aufzunehmen vermag. Bei jedem Arbeitstakt schiebt der Druckzylinder (11) also eine leere Form in der Einspeisestation (12), zwei leere Formen (3) in der Speicherstation (13) und eine gefüllte Form (3) von der Extruderdüse (2) weg vor sich her, wobei die gefüllte Form (3) in die Aushebestation (14) auf die Aushebeplatte (15) geschoben wird. Die Figuren 5 und 6 zeigen lediglich Varianten; die Anzahl der Formen pro Station, insbesondere in der Speicherstation (13), kann variiert werden.

Es sei lediglich am Rand erwähnt, daß bei Formen (3) mit zwei Grundplatten (4) sinngemäß zusätzliche Führungen (6) der Ausgestaltung gem. Fig. 4 und 3 für diejenige Grundplatte vorgesehen werden müssen, die die zweite Grundplatte (4) aufnimmt und daß die Einspeisestation (12) wie die Aushebestation (14) in den im Prinzip C-förmigen Führungen (6) entsprechende Ausnehmungen haben müssen, damit die Formen (3) mit ihren Grundplatten (4) ein- und ausgeschoben bzw. -gehoben werden können.

Die bisher geschilderte Vorrichtung arbeitet nur halbautomatisch, indem sie den füllstandgerechten, möglichst schnellen Formenwechsel vor dem Extruder (1) bewirkt. Das Beschicken der Vorrichtung mit Formen (3) und Entnehmen der gefüllten Formen (3) in die Einspeisestation (12) bzw. aus der Aushebestation (14), das Einlegen der Aushebeplatten (15) ist Handarbeit bzw. muß von geeigneten rationalisierungsgerechten Einrichtungen vorgenommen werden.

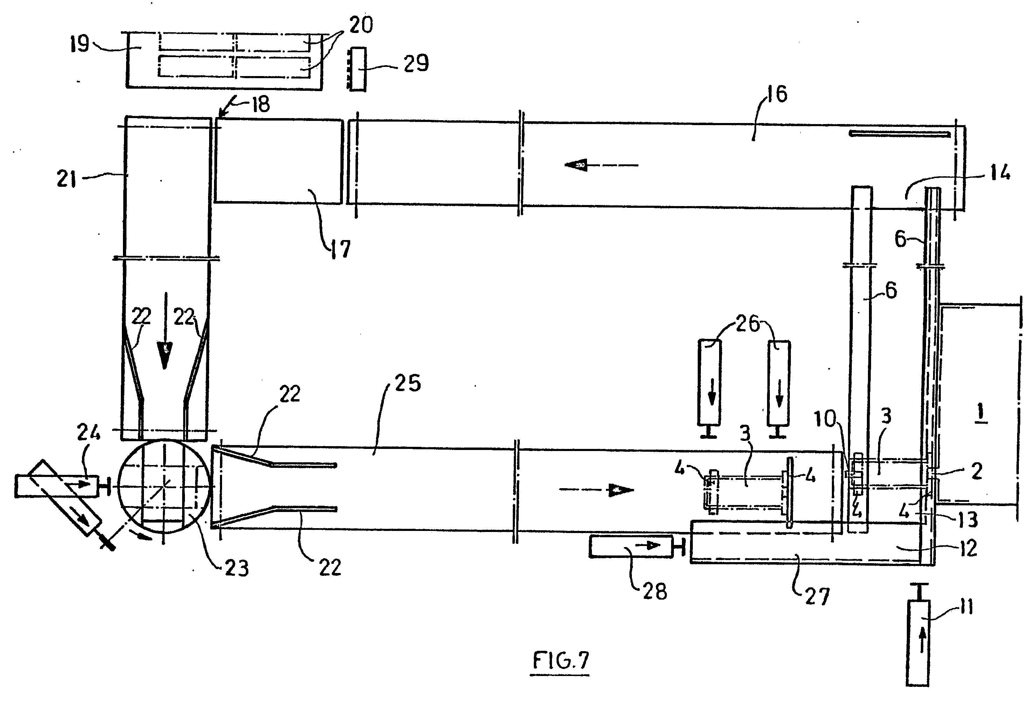

Die Fig. 7 zeigt eine vollautomatisch arbeitende Vorrichtung. Weitgehend identisch ist die Vorrichtung gem. Fig. 1 - 6 übernommen. Das bedeutet, daß vor dem Walzenextruder (1) mit den besonderen, schon geschilderten Eigenschaften bzw. seiner Extruderdüse (2) Führungen (6) für die Formen (3) mit Grundplatten (4) und in der extruderseitigen Grundplatte (4) befindlicher Füllöffnung (5) vorgesehen sind. Es gibt eine Einspeisestation (12), eine Speicherstation (13) und eine Aushebestation (14). Um die Handarbeit, das Einlegen der Aushebeplatten (15) einzusparen, andererseits aber die Entwicklungs- und Anlagekosten für eine Einlegeeinrichtung für die Aushebeplatten (15) zu sparen, wird derart variiert, daß das Verwenden von Aushebeplatten (15) überflüssig wird.

Diese Variation wird auf die Weise erzielt, daß entweder das Gestell (7) der Führungen (6) oder die die Extruderdüse (2) umgebende Oberfläche (8) so lang hinter der Extruderdüse (2) in den Führungen (6) verlängert wird, daß die Grundplatte (4) mit der Füllöffnung (5) verschlossen bleibt, bis sich der Kunststoff in der frisch gefüllten Form (3) im Laufe des taktweisen Vorschubes durch den Druckzylinder (1) von den Randzonen her so weit verfestigt hat, daß er nicht mehr aus der Füllöffnung (5) herauslaufen kann. Die Führungen (6) müssen daher hinter der Extruderdüse (2) lediglich lang genug ausgebildet werden.

Da es sich um eine vollautomatisch arbeitende Vorrichtung handelt, kann die Speicherstation (13) so verkürzt werden, daß sie nur eine Form aufnimmt.

Die Aushebestation (14) der automatischen Vorrichtung endet nach entsprechender Länge, d. h. entsprechender Vorabkühlung des Kunststoffes in den Formen (3) am Beschickungsende eines Förderers (16), der so lang ausgebildet ist und taktgerecht langsam fördert, daß der Kunststoff in den Formen (3) weiter aushärtet. Die vollständige Verfestigung würde jedoch auf diese Weise zu lange Zeit bzw. zu lange Förderer (16) erfordern. Deshalb ist mit diesem Förderer (16) eine Kühleinrichtung (17) verbunden. Im einzelnen nicht dargestellt ist, daß diese Kühleinrichtung (17) ein Wasserbad aufweist, in welches die gefüllten Formen (3) eingetaucht und gekühlt werden und dabei über einen pneumatischen Rost geführt werden und am Ende wieder aus dem Wasserbad herausgehoben und einer Entnahmestation oder -einrichtung zugeführt werden. Der Entnahmeeinrichtung oder -station (18) könnte eine selbsttätig arbeitende Entformeinrichtung zugeordnet sein, im Beispiel gemäß Fig. 7 ist jedoch eine Ablageplattform (19) vorgesehen, auf welcher die Formen (3) von Hand entformt, d. h. Formteile (20) entnommen und auf der Ablageplattform (19) abgelegt werden. Der Förderer (16) schließt sich an den Verlauf der Führungen (6) rechtwinklig an. An die Entnahmestation (18) schließt sich das Beschickungsende eines Weiterförderers (21) erneut rechtwinklig an. Die Formen (3) werden auf diesen Weiterförderer (21) aufgelegt, sollten dabei möglichst mit der Grundplatte (4), die die Füllöffnung (5) aufweist, nach vorn, also in Förderrichtung weisend, aufgelegt werden. Um die Formen (3) einheitlich längsorientiert zu bewegen, hat der Weiterförderer (21) Führungswände (22).

Das Abgabeende des Weiterförderers (21) schiebt die Formen (3) auf ein Karussel (23). Dem Karussel (23) sind Druckzylinder (24) zugeordnet, die jeweils 90-Grad-Drehungen des Karussels (23) bewirken und damit die auf das Karussel (23) aufgeschobenen Formen (3) mit der Füllöffnung (5) voran um 90 Grad drehen, während ein weiterer Druckzylinder (24) dafür sorgt, daß die Formen (3) nach der 90-Grad-Drehung auf das Beschickungsende eines Zwischenförderers (25) aufgeschoben werden. Mit den Grundplatten (4) mit den Füllöffnungen (5) voran werden die Formen (3) von weiteren seitlichen Führungswänden (22) längsorientiert. Der Zwischenförderer (25) erstreckt sich vom Karussel (23) bis in die Nähe der Einspeisestation (12) der Führungen (6). Im Bereich des Abgabeendes sind zwei Druckzylinder (26) vorgesehen, welche rechtwinklig zur Länge des Zwischenförderers (25) arbeiten. Auf der gegenüberliegenden Seite des Zwischenförderers befindet sich eine U-Schiene (27), die parallel zum Zwischenförderer (25) verläuft und in die Einspeisestation (12) der Führungen (6) mündet. Gelangt eine Form (3) in den Arbeitsbereich der Druckzylinder (26), so wird diese quer zu sich selbst in die U-Schiene (27) eingeschoben. Am Ende, das der Einspeisestation (12) abgekehrt ist, weist die U-Schiene (27) einen Druckzylinder (28) auf, der die Form in Richtung Einspeisestation (12) in der U-Schiene (27) weiterschiebt. In der Einspeisestation (12) ist der bereits erwähnte Druckzylinder (11) tätig, der abhängig von den optischen Sensoren (10) taktweise Formen (3) in die Führungen (6) einspeist.

Die einzelnen Arbeitshübe der Druckzylinder erfolgen druckkontaktgesteuert, mit Ausnahme des Druckzylinders (11), so daß ein stockungsfreies Arbeiten gewährleistet ist. Durch Speicherlängen für Formen (3), die in der U-Schiene (27) vorgesehen sind, lassen sich unregelmäßige Vorschubtakte leerer Formen ausgleichen. Die einzelnen Arbeitshübe, -takte usw. werden von einem Schaltschrank 29 überwacht, wobei Sicherheitsverriegelung und übliche Maßnahmen vorgesehen sind, um den reibungslosen Ablauf zu gewährleisten.

Die vollautomatische Vorrichtung gemäß Fig. 7 arbeitet in der Weise, daß aus der Einspeisestation (12) jeweils eine leere Form (3) in die Führungen (6) eingespeist wird, wobei sie leere Formen aus der Speicherstation (13) vor sich her schiebt und eine Form (3) vor die Extruderdüse (2) bewegt. Es erfolgt die Füllung und die optischen Sensoren (10) lösen einen erneuten Arbeitshub des Druckzylinders (11) aus. Die gefüllten Formen (3) wandern in Führungen so lange an den Füllöffnungen (5) verschlossen entlang, bis sie randnah so weit erstarrt sind, daß kein plastifizierter Kunststoff mehr aus den Füllöffnungen auslaufen kann, sie kommen dann an die Aushebestation (14), in der sie auf den Förderer (16) gelangen und einer weiteren Kühlung unterzogen werden. In der Kühleinrichtung (17) wird so weit abgekühlt, bis entformt werden kann. Die Formteile (20) werden auf einer Ablageplattform (19) gelagert und abtransportiert, die leeren Formen (3) werden auf einen Weiterförderer (21) aufgegeben, vom Karussel (23) gewendet und vom Zwischenförderer (25) wieder über die U-Schiene (27) in die Einspeisestation (12) zurückgeführt. Somit ist ein Formenkreislauf gewährleistet.

Mit der Anlage gemäß Fig. 7 können aus Kunststoffmüll Serien großformatiger, schwergewichtiger Formteile (20) preiswert hergestellt werden. Diese Formteile haben aufgrund spezifischer Gestalt und Natur einen Markt. Damit wird nicht nur ein Abfallbeseitigungs-Problem bewältigt, sondern ein Abfall, dessen Beseitigung Schwierigkeiten bereitet, zu einem wertvollen Rohprodukt, das wirtschaftlichen Nutzen erbringt, umgewandelt.

Alle in der Beschreibung und/oder den Zeichnungen dargestellten Einzel- und Kombinationsmerkmale werden als erfindungswesentlich angesehen.

**Patentansprüche**

1. Verfahren zum Herstellen von Formteilen aus thermoplastischem Kunststoff, insbesondere ungereinigten und unsortierten Kunststoffabfällen, bei dem der Kunststoff in einem Walzenextruder plastifiziert und anschließend zu Preß- und Formteilen weiterverarbeitet wird, dadurch gekennzeichnet, daß die Kunststoffabfälle im Walzenextruder auf einen Druck von bis zu ca. 140 bar gebracht werden, daß vor der Extruderdüse des Walzenextruders taktweise gesteuert liegend angeordnete Formen, die wenigstens an ihren extruderseitigen Enden mit Grundplatten versehen sind, mit den Grundplatten in quer zur Extruderdüse verlaufenden Führungen aus einer Speicherzone mit einem zentralen Fülloch in der extruderseitigen Grundplatte vor die Extruderdüse geschoben werden, daß die vor der Extruderdüse liegende Form mit den plastifizierten Kunststoffabfällen unter dem Druck des Extruders gefüllt wird, daß der Füllzustand der Form überwacht wird, daß bei Erreichen der Sollfüllung ein erneuter Vorschub auf die Formen in der Speicherzone ausgeübt wird, welcher die gefüllte Form seitlich von der Extruderdüse weg mit der Grundplatte über eine Wartezone hinweg auf eine in eine Aushebestation der Führungen eingelegte Aushebeplatte geschoben und dabei die Füllöffnung in der Grundplatte verschlossen wird, wobei gleichzeitig eine neue Form aus der Speicherzone vor die Extruderdüse geschoben wird und die extruderseitigen Oberflächen der Grundplatten während des Formwechsels an den Rändern der Extruderdüse dichtend gleiten und die Extruderdüse vorübergehend gegen den Austritt von Kunststoff verschließen, daß die Formen aus der Aushebestation entnommen und gekühlt werden, wonach die Formteile entnommen und die Formen in eine Eingabestation der Führungen eingebracht werden.

2. Verfahren nach Anspruch 1, dadurch gekennzeichnet, daß Formen mit einem großen Fassungsvermögen bis z. B. 100 kg Kunststoff oder mehr unter Druck gefüllt werden.

3. Verfahren nach Anspruch 1 und/oder 2, dadurch gekennzeichnet, daß Formen gefüllt werden, deren Verhältnis von Querschnitt zu Länge bei Umrechnung der Querschnittsgröße auf einen Kreisdurchmesser 1:15 beträgt.

4. Verfahren, insbesondere nach einem oder mehreren der Ansprüch 1 bis 3, dadurch gekennzeichnet, daß das Füllen der Formen, das Kühlen, das Zuführen der leeren Formen zur Eingabestation der Führungen sowie das taktweise Auswechsein der gefüllten Formen vor der Extruderdüse automatisch durchgeführt werden.

5. Verfahren nach Anspruch 4, dadurch gekennzeichnet, daß die Aushebeplatten in der Aushebestation von einer abhängig von Berührungskontakten der Form arbeitenden Einlegeeinrichtung in die Führungen eingelegt werden, daß die auf Aushebeplatten aufgeschobenen, gefüllten Formen nach Vorerstarren des eingefüllten Kunststoffs quer zur bisherigen Förderrichtung in eine Kühleinrichtung transportiert werden.

6. Verfahren nach Anspruch 4 und/oder 5, dadurch gekennzeichnet, daß die gefüllten Formen in der Kühleinrichtung in ein Wasserbad getaucht, über einen pneumatischen Rost gefördert, alsdann wieder angehoben, in eine Entformstation gefördert, von Hand entformt und leer auf einen Weiterförderer aufgegeben werden.

7. Verfahren nach einem oder mehreren der Ansprüche 4 bis 6, dadurch gekennzeichnet, daß die von dem an die Entformstation anschließenden Weiterförderer bewegten leeren Formen während der Bewegung einheitlich längsorientiert einem Karussel zugeführt werden und von diesem jeweils mit der Füllöffnung voran taktweise auf einen rechtwinklig anschließenden Zwischenförderer der Einspeiseeinrichtung aufgeschoben werden.

8. Verfahren nach einem oder mehreren der Ansprüche 4 bis 7, dadurch gekennzeichnet, daß die leeren Formen beim Aufschieben auf den Zwischenförderer längsorientiert, alsdann berührungskontaktgesteuert taktweise quer zu sich selbst auf eine seitlich neben dem Abgabeende des Zwischenförderers parallel zu diesem ausgerichtete U-Schiene der Einspeiseeinrichtung aufgeschoben und auf der U-Schiene ebenfalls berührungskontaktgesteuert längs zu sich selbst und quer zur U-Schiene mit der Füllöffnung voran in die Einspeisestation der Führungen bewegt werden.

9. Verfahren nach einem oder mehreren der Ansprüche 1 bis 8, dadurch gekennzeichnet, daß die in die Einspeisestation eingebrachte Form zusammen mit in einer Speicherzone befindlichen Formen in den Führungen von einer Schubeinrichtung, abhängig von der sensorisch gemeldeten Füllung der vor der Extruderdüse befindlichen Form, taktweise, quer zu sich selbst um eine Formen- bzw. Grundplattenbreite in Richtung Extruderdüse gefördert werden.

10. Vorrichtung zum Herstellen von Formteilen aus thermoplastischen Kunststoffen, insbesondere ungereinigten und unsortierten Kunststoffabfällen, bei der ein Walzenextruder zum Plastifizieren des Kunststoffes vorgesehen ist und bei der der plastifizierte, aus einer Extruderdüse austretende Kunststoff in Formen einfüllbar ist, insbesondere zur Ausübung des erfindungsgemäßen Verfahrens nach den Ansprüchen 1 bis 3 und 9, dadurch gekennzeichnet, daß der Walzenextruder (1) Druck in Größenordnungen von bis zu 140 bar aufbauend und gegenüber diesem Druck dicht ausgebildet ist, daß die Formen (3) wenigstens an einem Ende, Formen (3) mit über ihrer Länge veränderlichem Querschnitt wenigstens am Ende mit dem größten Querschnitt eine über die äußeren Formumrisse hinausragende Grundplatte (4) aufweisen, daß die Formen (3) oben und unten Löcher (9) zur optischen Überwachung des Füllzustandes haben, daß die Grundplatte (4) eine zum Formquerschnitt zentrierte, der Form der Extruderdüse (2) angepaßte Füllöffnung (5) aufweist, daß wenigstens parallel zur Lotebene der Öffnung der Extruderdüse (2) Führungen (6) angeordnet sind, welche zugleich rechtwinklig zur Ausstoßrichtung der Extruderdüse (2) verlaufen, daß die Grundplatten (4) mit dem oberen und unteren Rand bei liegenden, mit ihren Längsachsen parallel zur Ausstoßrichtung orientierten Formen (3) in den Führungen (6) gehalten sind, daß die extruderseitige Grundplatte (4) dichtend gleitend an der die Extruderdüse (2) umgebenden Oberfläche (8) geführt ist, daß die Führungen (6) an einem Ende in einer Einspeisestation (12) offen sind, und daß Formen (3) mit den Füllöffnungen (5) voran in die Führungen (6) einschiebbar sind, daß an der Einspeisestation (12) ein in Längsmittelrichtung der Führungen (6) orientierter Druckzylinder (11) mit einer Grundplattenbreite entsprechender Arbeitshublänge vorgesehen ist, daß neben der Einspeisestation (12) der Führungen (6) in Richtung Extruderdüse (2) eine Speicherstation (13) vorgesehen ist, deren Länge wenigstens der Breite der Grundplatte (43) einer Form entspricht, daß neben der Speicherstation (13) die Füllstation mit der Extruderdüse (2) liegt, daß in Vorschubrichtung der Formen (33) an die Füllstation anschließend vorzugsweise eine Wartezone vorgesehen ist, deren Länge der Breite mehrerer Grundplatten (4) entspricht, wobei wenigstens eine Form (3) mit ihrer Grundplatte (4) dichtend gleitend hinter der Extruderdüse (2) an der Oberfläche (8), die die Extruderdüse (2) umgibt, oder an einer anderen Fläche (73) anliegend geführt ist, und daß am Ende der Führungen (6) eine Aushebstation (15), die an der Grundplatte (4) dichtend gehalten ist, verschlossene Füllöffnungen (53) aufweisen und aus den Führungen (6) entnehmbar sind.

11. Vorrichtung nach Anspruch 10, dadurch gekennzeichnet, daß die Formen (3) an beiden Enden mit Grundplatten (4) versehen sind.

12. Vorrichtung nach den Ansprüchen 10 und/oder 11, dadurch gekennzeichnet, daß die beiden Grundplatten (4) gleiche Form und Größe haben.

13. Vorrichtung nach einem oder mehreren der Ansprüche 10 bis 12, dadurch gekennzeichnet, daß die Formen (3) ein Volumen zur Aufnahme von bis zu 100 oder mehr kg plastifizierten Kunststoffes aufweisen.

14. Vorrichtung nach einem oder mehreren der Ansprüche 10 bis 13, dadurch gekennzeichnet, daß die Formen (3) bei Hohlräumen für nichtprismatische Gestalt der Formteile die Grundplatte (4) mit der Füllöffnung (5) an dem Ende aufweisen, an dem der größtmögliche Querschnitt der Formteile (20) liegt.

15. Vorrichtung nach einem oder mehreren der Ansprüche 10 bis 14, dadurch gekennzeichnet, daß Querschnittsgröße und Länge einer Form (3) ein Verhältnis von 1:15 nicht unterschreiten, wenn mit "1" der Durchmesser eines mit dem Formquerschnitt größengleichen Kreises und mit "15" die Länge der Form definiert ist.

16. Vorrichtung nach einem oder mehreren der Ansprüche 10 bis 15, dadurch gekennzeichnet, daß die Führungen (6) zur Aufnahme der Kanten der Grundplatten (4) je eine oben und unten verlaufende C-Schiene aufweisen, und daß die beiden C-Schienen mit einander zugekehrten Öffnungen abstandskonstant mittels eines Gestells (7) verbunden sind.

17. Vorrichtung nach einem oder mehreren der Ansprüche 10 bis 16, insbesondere zur Ausübung des Verfahrens nach den Ansprüchen 4 bis 8, dadurch gekennzeichnet, daß die Aushebestation (14) der Führungen (6) an einen rechtwinklig zu den Führungen (6) verlaufenden Förderer (16) angeschlossen ist, daß dieser Förderer (16) in eine Kühleinrichtung (17) mit Wasserbad und pneumatischem Rost eingegliedert und an seinem Ende mit einer Formen-Entnahmestation (18) versehen ist, welche neben einer Entformstation mit Ablageplattform (19) liegt, daß rechtwinklig zu diesem Förderer (16) verlaufend ein Weiterförderer (21) vorgesehen ist, welcher seitliche Führungswände (22) zum Längsorientieren der leeren Formen (3) aufweist und ein Abgabeende aufweist, welches an ein Karussel (23) angrenzt, welches die Formen (3) einheitlich mit den Füllöffnungen (5) voran um 90 Grad dreht und mittels eines Druckzylinders (24) auf einen Zwischenförderer (25), der rechtwinklig zum Weiterförderer (21) in Richtung Einspeisestation (12) der Führungen (6) verläuft und fördert, aufschiebt, daß seitlich neben dem Ende des Zwischenförderers (25) eine U-Schiene (27) parallel verläuft und dieser gegenüber zwei Druckzylinder (26) vorgesehen sind, welche die Formen (3) quer zu sich selbst auf die U-Schiene (27) schieben, daß die U-Schiene (27) in die Einspeisestation (12) der Führungen (6) mündet und am der Einspeisestation (12) abgekehrten Ende einen Druckzylinder (28) aufweist, welcher die Formen (3) in die Einspeisestation (12) einschiebt, und daß alle Druckzylinder (24, 26, 28) der Förderer (23, 25) berührungskontaktgesteuert sind, der Druckzylinder (11) der Führungen (6) mittels optischer, den Kontrolllöchern (9) der Formen (3) in der Füllstation zugeordnete Sensoren (10 gesteuert ist.

**Revendications**

1. Procédé pour la production d'articles formés en matière thermoplastique, notamment en déchets de plastique présentant des impuretés et non triés, la matière plastique étant plastifiée dans une extrudeuse cylindrique et transformée ensuite en pièces estampées et moulées, caractérisé par le fait que les déchets de plastique sont soumis à une pression de 140 bars au maximum dans l'extrudeuse cylindrique, que devant la buse d'extrudeuse de l'extrudeuse cylindrique des moules placés horizontalement et commandés à cadence, pourvus de plaques de fondation au moins à leurs bouts du côté de l'extrudeuse sont poussés avec les plaques de fondation dans des guidages transversaux à la buse d'extrudeuse à partir d'une zone de dépôt à trou central de remplissage dans la plaque de fondation du côté de l'extrudeuse pour arriver devant la buse d'extrudeuse, que le moule placé horizontalement devant la buse d'extrudeuse est rempli avec les déchets de plastique plastifiés sous la pression de l'extrudeuse, que le niveau de remplissage du moule est surveillé, qu'une fois le niveau prévu atteint, une nouvelle poussée est exercée sur les moules dans la zone de dépôt qui fait avancer le moule rempli latéralement avec la plaque de fondation à partir de la buse d'extrudeuse en passant par une zone d'attente pour arriver sur une plaque de démoulage intégrée dans une station de démoulage des guidages, l'ouverture de remplissage dans la plaque de fondation étant fermée et en même temps un nouveau moule étant poussé de la zone de dépôt jusque devant la buse d'extrudeuse et les surfaces des plaques de fondation tournées vers l'extrudeuse glissant de façon étanchante aux bords de la buse d'extrudeuse pendant le changement de moule et fermant temporairement la buse d'extrudeuse pour éviter la sortie de la matière plastique, que les moules sont pris dans la station de démoulage et refroidis et qu'ensuite les pièces moulées sont retirées et les moules sont mis dans une station d'introduction des guidages.

2. Procédé d'après la revendication numéro 1, caractérisé par le fait que les moules à grande capacité, p.ex. jusqu'à 100 kg de matière plastique ou plus sont remplis sous pression.

3. Procédé d'après les revendications numéro 1 et/ou 2, caractérisé par le fait qu'on remplit des moules dont la relation de section transversale et de longueur après conversion de la section transversale en diamètre du cercle est de 1 à 15.

4. Procédé, notamment d'après une ou plusieurs des revendications numéro 1 à 3, caractérisé par le fait que le remplissage des moules, le refroidissement, la conduite des moules vides aux stations d'introduction des guidages ainsi que le changement à cadence des moules remplis devant la buse d'extrudeuse sont effectués automatiquement.

5. Procédé d'après la revendication numéro 4, caractérisé par le fait que les plaques de démoulage dans la station de démoulage sont introduites dans les guidages par une installation d'introduction travaillant en dépendance de contacts du moule, que les moules poussés sur les plaques de démoulage et remplis sont transportés après présolidification de la matière plastique transversalement à la direction de transport pratiquée jusqu'ici dans une installation de refroidissement.

6. Procédé d'après les revendications numéro 4 et/ou 5, caractérisé par le fait que les moules remplis sont plongés dans un bain-marie dans l'installation de refroidissement, transportés sur une grille pneumatique, remontés, transportés dans une station de démoulage, démoulés manuellement et remis vides sur un rétransporteur.

7. Procédé d'après une ou plusieurs des revendications numéro 4 à 6 caractérisé par le fait que les moules vides transportés par le rétransporteur suivant la station de démoulage sont conduits pendant le transport de façon homogène longitudinale vers un tour vertical qui les pousse avec leur ouverture de remplissage respective en avant à cadence sur un transporteur intermédiaire de l'installation de remplissage joint de façon rectangulaire.

8. Procédé d'après une ou plusieurs des revendications numéro 4 à 7, caractérisé par le fait que les moules vides lors de leur transport sur les transporteurs intermédiaires sont poussés d'abord de façon longitudinale, ensuite commandée par contact, à cadence et transversale vers soi-même sur un rail en U de l'installation d'introduction disposé latéralement à côté de la sortie du transporteur intermédiaire et parallèlement à celui-ci et sont transportés sur le rail en U également à commandement par contact, de façon longitudinale vers soi-même et transversale vers le rail en U avec l'ouverture de remplissage en avant dans la station de remplissage des guidages.

9. Procédé d'après une ou plusieurs des revendications numéro 1 à 8, caractérisé par le fait que les moules introduits dans la station d'introduction sont transportés ensemble avec des moules se trouvant dans une zone de dépôt dans les guidages d'une installation de poussée en dépendance d'un remplissage averti de façon sensorielle du moule placé devant la buse d'extrudeuse à cadence et de façon transversale vers soi-même d'une largeur de moule, respectivement de plaque de fondation en direction de la buse d'extrudeuse.

10. Dispositif pour la production d'articles formé; en matière thermoplastique, notamment en déchet de plastique présentant des impuretés et non triés, prévoyant une extrudeuse cylindrique pour la plastification de la matière plastique et rendant possible le remplissage de la matière plastique plastifiée et sortant d'une buse d'extrudeuse dans des moules, notamment pour exercer le procédé conformément à l'invention d'après les revendications numéro 1 à 3 et 9, caractérisé par le fait
que l'extrudeuse cylindrique (1) peut constituer une pression de l'ordre jusqu'à 140 bars et est formée de façon étanche envers cette pression,
que les moules (3) sont pourvus au moins à un bout et les moules (3) à section transversale variable en longueur au moins au bout au plus grand diamètre d'une plaque de fondation (4) dépassant les contours extérieurs des moules,
que les moules (3) ont des trous (9) en haut et en bas qui servent à surveiller optiquement le niveau de remplissage
que la plaque de fondation (4) est munie d'une ouverture de remplissage (5) centrée vers la section transversale du moule et adaptée à la forme de la buse d'extrudeuse (2),
qu'au moins parallèlement au plan vertical de l'ouverture de la buse d'extrudeuse (2) des guidages (6) sont disposés qui prennent en même temps une direction rectangulaire à la sortie de la buse d'extrudeuse (2),
que les plaques de fondation (4) sont retenues dans les guidages (6) par les bords supérieur et inférieur, les moules (3) placés horizontalement et leurs axes longitudinaux parallèles à la direction de rendement,
que la plaque de fondation (4) du côté de l'extrudeuse est guidée de façon glissante et étanche sur la surface (8) entourant la buse d'extrudeuse (2),
que les guidages (6) sont ouverts à un bout dans une station d'introduction (12),
que les moules (3) sont introduisables dans les guidages (6), leurs ouvertures de remplissage (5) en tête,
qu'à la station d'introduction (12) un cylindre compresseur (11) orienté en direction centrale longitudinale des guidages (6) est prévu à une longueur de course motrice de travail correspondant à la largeur de la plaque de fondation,
qu'à côté de la station d'introduction (12) des guidages (6) en direction de la buse d'extrueuse (2) une station de dépôt (13) est prévue dont la longueur correspond au moins à la largeur d'une plaque de fondation (4) d'un moule,
qu'à côté de la station de dépôt (13) il y a la station de remplissage avec la buse d'extrueuse (2),
qu'en direction d'avancement des moules (3) immédiatement après la station de remplissage une zone d'attente est prévue de préférence, dont la longeur correspond à la largeur de plusieurs plaques de fondation (4), au moins un des moules (3) étant guidé avec sa plaque de fondation (4) de façon glissante et étanche derrière la buse d'extrudeuse (2) affleurant la surface (8) entourant la buse d'extrudeuse (2) ou une autre surface (7), et qu'au bout des guidages (6) une station de démoulage (15) retenue de façon étanche à la plaque de fondation (4) dispose d'ouvertures de remplissage (5) fermées et retirables des guidages (6).

11. Dispositif d'après la revendication numéro 10, caractérisé par le fait que les moules (3) sont munis de leurs deux bouts de plaques de fondation (4).

12. Dispositif d'après les revendications numéro 10 et/ou 11, caractérisé par le fait que les deux plaques de fondation (4) ont la même forme et taille.

13. Dispositif d'après une ou plusieurs des revendications numéro 10 à 12, caractérisé par le fait que les moules (3) disposent d'un volume d'entrée jusqu'à plus de 100 kg de matière plastique plastifiée.

14. Dispositif d'après une ou plusieurs des revendications numéro 10 à 13, caractérisé par le fait que lors de creux pour une forme non-prismatique des pièces moulées, les moules (3) disposent d'une plaque de fondation (4) à ouverture de remplissage (5) au bout, où se trouve le plus grand plan transversal possible des pièces moulées (20).

15. Dispositif d'après une ou plusieurs des revendications numéro 10 à 14, caractérisé par le fait que la grandeur du plan transversal et la longueur d'un moule (3) ne sont pas inférieures au prorata de 1 à 15, le diamètre d'un cercle correspondant en grandeur au plan transversal du moule étant défini par "1" et la longueur du moule par "15".

16. Dispositif d'après une ou plusieurs des revendications numéro 10 à 15, caractérisé par le fait que les guidages (6) pour les bords des plaques fondamentales (4) sont pourvus d'un rail en C inférieur et supérieur respectifs, et que les deux rails en C sont reliés, leurs ouvertures tournées l'une vers l'autre à écart constant à l'aide d'un cadre.

17. Dispositif d'après une ou plusieurs des revendications numéro 10 à 16, notamment pour exercer le procédé d'après les revendications numéro 4 à 8, caractérisé par le fait que la station de démoulage (14) des guidages (6) est reliée à un transporteur (16) rectangulaire aux guidages (6), que ce transporteur (16) est intégré dans une installation de refroidissement (17) à bain-marie et grille pneumatique et muni à son bout d'une station de reprise des moules (18) aménagé à côté d'une station de démoulage à plate-forme de dépôt (19), que rectangulairement à ce transporteur (16) un retransporteur (21) est prévu, muni de murs de guidage (22) latéraux pour l'orientation longitudinale des moules vides (3) et d'un bout de décharge adjacent à un tour vertical (23) tournant les moules (3) homogènement, les ouvertures de remplissage (5) en avant de 90 degrés et les poussant à l'aide d'un cylindre compresseur (24) sur un transporteur intermédiaire (25) allant et transportant rectangulairement au retransporteur (21) en direction de la station d'introduction (12) des guidages (6), que latéralement à côté du bout du transporteur intermédiaire (25) passe parallèlement un rail en U, en face duquel deux cylindres compresseur (26) sont prévus poussant les moules (3) de façon transversale à soi-même sur le rail en U (27), que le rail en U (27) aboutit dans la station d'introduction (12) des guidages (6) et dispose au bout détourné de la station d'introduction (12) d'un cylindre compresseur (28) qui fait passer les moules (3) dans la station d'introduction (12), et que tous les cylindres compresseur (24, 26, 28) des transporteurs (23, 25) sont commandés par contact, le cylindre compresseur (11) des guidages (6) étant commandé par des tâteurs (10) optiques adjoints aux trous de contrôle (9) des moules (3) dans la station de remplissage.

## Claims

1. A method for producing moulded thermoplastic articles, especially unpurified and unsorted scrap plastics, according to which said thermoplastics are plasticized in a drum extruder and subsequently further processed to pressed and moulded articles, characterized in that said scrap plastics are put under pressure of up to about 140 bar; horizontally arranged and clock-controlled forms, disposed in front of an extruder die of said drum extruder and provided at least at their extruder-sided ends with base plates, are pushed with said base plates in guiding mechanisms running transversely to said extruder die, from a storage zone, equipped with a central charging hole in said extruder-sided base plate, in front of said extruder die; said horizontal form, disposed before said extruder die, is filled with said plasticized scrap plastics by said drum extruder exercising said pressure; said filling state of said form is controlled; by reaching a desired filling position, a repeated feed advance is again exercized on said forms in said storage zone, which pushes said filled form, laterally off said extruder die, together with said base plate via a waiting zone onto a lifting plate inserted into a lifting station of said guiding mechanisms and thereby closes said charging hole in said base plate, whereby a new form is simultaneously pushed from said storage zone in front of said extruder die, and whereby extruder-sided surfaces of said base plates during changing said forms slide by sealing on rims of said extruder die, and thereby closing temporarily said extruder die against emerging of plastics; said forms are withdrawn from said lifting station and are cooled off, whereupon said moulded thermoplastic articles are removed and brought into a charging station of said guiding mechanisms.

2. The method according to claim 1, characterized in that forms of high holding capacity, e.g. up to 100 kg or more, are being filled under pressure.

3. The method according to claim 1 and/or 2, characterized in that said forms are being filled, of which the ratio of cross-section to length comes to 1 to 15, when the size of said cross-section is converted into a circular diameter.

4. The method, particularly according to one or more of the claims 1 to 3, charaoterized in that said filling of said forms, cooling, conveying of said empty forms into said charging station of said guiding mechanisms as well as said clock-controlled changing of said filled forms are automatically executed in front of said extruder die.

5. The method according to claim 4, characterized in that said lifting plates in said lifting station are inserted into said guiding mechanisms by an insertion device working dependently on contact facilities of said form; said filled forms, slided onto said lifting plates, after pre-solidifying of said filled-in thermoplastics, are being cross-wise transported to said hitherto conveying direction into a cooling device.

6. The method according to claim 4 and/or 5, characterized in that said filled forms in said cooling device are dipped into a water basin, subsequently conveyed over a pneumatic grate, thereupon again lifted, then conveyed into an ejecting station, ejected by hand and after discharging loaded onto a continuing conveyor.

7. The method according to one or more of the claims 4 to 6, characterized in that said emptied forms transported by said continuing conveyor joining said ejecting station are being moved during transportation as a unit in longitudinal direction to a revolving device and by said device, each form with its charging hole ahead, are clock-controlled slided onto an intermediate conveyor joining rectangularly said charging mechanisms.

8. The method according to one or more of the claims 4 to 7, characterized in that said empty forms, during sliding onto said intermediate conveyor, are lengthwise, then, contact- and clock-controlled as well as cross-wise arranged to themselves, slided onto an U-shaped profile of said charging mechanism, which is laterally placed beside said discharging end of said intermediate conveyor and parallel aligned to said device, and, also contact-controlled, longitudinally oriented to themselves as well as cross-wise arranged to said U-shaped profile, with their charging holes ahead, are moved on said U-shaped profile into said charging station of said guiding mechanisms.

9. The method according to one or more of the claims 1 to 8, characterized in that said form, inserted into said charging station, together with forms located in a storage zone are conveyed in said guiding mechanisms by a push device, depending on a sensor-recorded filling of said form situated in front of said extruder die, whereby said forms, clock-controlled and cross-wise oriented to themselves, are moved each by a width of said form and a width of said base plate respectively towards said extruder die.

10. Apparatus for producing moulded plastic articles, especially unpurified and unsorted scrap plastics, at which a drum extruder is provided for plastifying said thermoplastic and at which said plastified thermoplastic emerging from an extruder die is chargeable into forms, particularly for executing the inventive method according to claims 1 to 3 and 9, characterized in that
said drum extruder (1) produces pressure by a magnitude of up to 140 bar and is densely sealed against said pressure;
said forms (3), at least at one end comprise forms (3) with changeable diameters along their total length, whereby said forms with maximum diameters, at least at said end, have a base plate projecting over external contours;
said forms (3), on top and bottom, are equipped with holes (9) for controlling optically the filling state;
said base plate (4) comprises a charging hole (5) centered to said form diameter and adapted to said form of said extruder die;
there are guiding mechanisms (6) being parallel arranged to a vertical plane of said opening of said extruder die (2), whereby said guiding mechanisms (6) run conjointly perpendicular to a discharging direction of said extruder die (2);
said base plates (4), provided with upper and lower rims, are held in said guiding mechanisms (6), whereby said horizontal forms are oriented with their longitudinal axes parallel to said charging direction;
said extruder-sided base plate (4) slides under tight sealing on a surface (8) surrounding said extruder die (2);
said guiding mechanisms (6) are open at one end in a charging station (12);
and that said forms (3), with said charging holes (5) ahead, are insertable into said guiding mechanisms (6);
a pressure cylinder (11), oriented in the middle of a longitudinal direction of said guiding mechanisms (6), is provided at said charging station (12), of which a length of working stroke corresponds to a base plate width;
a storage station (13), arranged beside said charging station of said guiding mechanisms (6) towards said extruder die (2), is provided, whereby the length of said storage station corresponds at least with said width of said base plate (4) of a form;

beside said storage station (13), the feeding station is arranged with said extruder die;
in advance direction of said forms (3) joining said filling station, a waiting zone is preferably provided, the length of which corresponds with the width of several base plates (4), whereby at least one of said forms (3) with its base plate (4) is guided by sliding under tight sealing in the rear of said extruder die (2) on said surface (8) surrounding said extruder die (2), or is guided adjacent to another plane (7), and that at the end of said guiding mechanisms (6) is provided a lifting station (15) being tightly kept at said base plate (4), comprises closed charging holes (5) and can be removed from said guiding mechanisms (6).

11. The apparatus according to claim 10, characterized in that said forms (3) are provided at both ends with said base plates (4).

12. The apparatus according to claims 10 and/or 11, characterized in that said both base plates (4) have the same form and size.

13. The apparatus according to one or more of the claims 10 to 12, characterized in that said forms (3) have a volume for receiving of up to 100 or more kg of plasticized plastics.

14. The apparatus according to one or more of the claims 10 to 13, characterized in that said forms (3), when equipped with hollow spaces of non-prismatic shape of said form parts, comprise said base plate (4), with said charging hole (5) arranged at said end, on which is situated the greatest possible diameter of said from parts (20).

15. The apparatus according to one or more of the claims 10 to 14, characterized in that diameter size and length of a form (3) do not come up to a ratio of 1 to 15, if by "1" is defined the diameter of a circle being equal in size with the form diameter, and by "15" is defined the length of said from.

16. The apparatus according to one or more of the claims 10 to 15, characterized in that said guiding mechanisms (6) for receiving edges of said base plates (4) comprise each a C-shaped profile arranged on top and bottom of said guiding mechanisms (6), and that said both C-shaped profiles, faced with openings to each other, are equidistantly connected by means of a frame.

17. The apparatus according to one or more of the claims 10 to 16, especially for executing the method according to claims 4 to 8, characterized in that
said lifting station (14) of said guiding mechanisms (6) is connected to a conveyor (16) running rectangular to said guiding mechanisms;
this conveyor (16) is fitted into a cooling device (17) equipped with a water basin and a pneumatic grate, and is provided at its end with a form-withdrawal station (18) arranged near an ejecting station having a depositing platform (19);
running rectangular to this conveyor (16), a continuing conveyor (21) is provided, which comprises lateral guiding walls (22) for orienting in longitudinal direction said empty forms (3) and has a discharging end adjacent to a revolving device (23) turning said forms (3), with their charging holes (5) ahead, as a unit by 90° and by means of a pressure cylinder (24) on an intermediate conveyor (25) going rectangular to said continuing conveyor (21) towards said charging station (12) of said guiding mechanisms (6) and is transporting as well as inserting;

laterally near to said end of said intermediate conveyor (25), a U-shaped profile (27) is parallel arranged, and that opposite to this U-shaped profile (27), two pressure cylinders (26) are provided, which push said forms (3), oriented transversely to themselves, onto said U-shaped profile (27);

said U-shaped profile (27) projects into said charging station (12) of said guiding mechanisms (6) and is provided at said end opposite to said charging station with a pressure cylinder (28) inserting said forms (3) into said charging station (12);

and that all pressure cylinders (24, 26, 28) of said conveyors (23, 25) are contact-controlled, and that said pressure cylinder (11) of said guiding mechanisms (6) is controlled by means of optical sensors (10) assigned to control-holes (9) of said forms (3) in said charging station (12).

FIG.1

EP 0 248 239 B1

FIG. 2

FIG.3

FIG.4

FIG.5

FIG.6

EP 0 248 239 B1

FIG.7

EP 0 248 239 B1